# EUROPÄISCHE PATENTSCHRIFT

(11) **EP 3 031 683 B1**
(45) Veröffentlichungstag und Bekanntmachung des Hinweises auf die Patenterteilung: **06.02.2019**
(21) Anmeldenummer: 14197195.2
(22) Anmeldetag: 10.12.2014
(51) Int. Cl.: B60T 13/68, B60T 17/18, B60T 15/04

(54) **Feststellbremsanlage**
Parking brake system
Installation d'un frein de stationnement

(43) Veröffentlichungstag der Anmeldung: 15.06.2016
(73) Patentinhaber: Haldex Brake Products Aktiebolag, 261 24 Landskrona (SE)
(72) Erfinder: Hege, Stefan, 69214 Eppelheim (DE)
(74) Vertreter: REHBERG HÜPPE + PARTNER

(56) Entgegenhaltungen:
- EP-A2- 1 837 261
- WO-A1-2013/133232
- DE-A1- 19 537 464
- DE-A1-102008 003 379
- DE-A1-102008 014 458

## Beschreibung

### TECHNISCHES GEBIET DER ERFINDUNG

Die Erfindung betrifft eine Feststellbremsanlage eines Nutzfahrzeugs, wobei es sich um ein Zugfahrzeug und/oder einen Anhänger handeln kann.

### STAND DER TECHNIK

Aus den Druckschriften EP 2 058 186 B1, EP 1 188 634 B1 und DE 10 2007 053 765 B4 sind Bremsanlagen eines Anhängers bekannt, bei welchen eine elektronische Steuerung einer Betriebsbremse erfolgt, wozu insbesondere eine sogenannte EBS-Steuereinheit Einsatz findet. Mittels der EBS-Steuereinheit ist eine Druck-Modulation für die Betätigung der Betriebsbremse möglich, womit eine Antiblockier-Regelung der Betriebsbremse erfolgen kann. Bremsanlagen eines Anhängers verfügen über einen rein pneumatischen Kreis zur Beaufschlagung der Federspeicher-Feststellbremsen, in welchem üblicherweise ein Löseventil, ein Anhängerbremsventil und ein Parkventil angeordnet sind. Das Anhängerbremsventil verfügt über eine Notbremsfunktion, welche bei Druckabfall an dem mit einem Kupplungskopf Vorrat des Anhängers verbundenen Vorratsanschluss eine Notbremsung verursacht. In einer Notbremssituation soll dabei für einen ausreichenden Druck in einem Behälter der Bremsanlage des Anhängers die Notbremswirkung unter Ausnutzung der EBS-Regelfunktion über die Betriebsbremsen erfolgen, während mit zunehmenden Druckabfall in dem Behälter ein zunehmender Anteil der Notbremskraft von den Federspeicher-Feststellbremsen übernommen wird. Beispielsweise die Druckschrift DE 10 2007 053 765 B4 offenbart hierzu ein so genanntes Anti-Compound-Ventil, hier in Ausgestaltung als Wechselventil, über welches eine Federspeicherkammer der Federspeicher-Feststellbremse sowohl mit der Bremsleitung der Betriebsbremsen als auch dem für die Beaufschlagung der Federspeicher-Feststellbremse vorgesehenen Ausgangsanschluss des Anhängerbremsventils bzw. Parkventils verbunden ist. Die Druckschrift EP 1 188 634 B1 widmet sich der Problematik, dass bei einem Druckabfall in der Bremsanlage des Anhängers nicht unerwünscht die Federspeicher-Feststellbremsen zumindest teilweise wirksam werden sollen. Vorgeschlagen wird hier, den Druck in der Federspeicherkammer grundsätzlich über ein Rückschlagventil zu sichern. Die Wirkung des Rückschlagventils wird aufgehoben, wenn kein Druck an dem Vorratsanschluss anliegt, so dass trotz des Einsatzes des Rückschlagventils die Notbremsfunktion herbeigeführt werden kann.

Weiterhin bekannt sind elektronische Druckluftaufbereitungseinrichtungen, welche üblicherweise insbesondere über einen Druckregler, einen Lufttrockner, ein Regenerationsventil, eine über ein Rückschlagventil gesicherte Zentralleitung sowie von der Zentralleitung abzweigende Kreisleitungen mit darin angeordneten Kreisschutzventilen in vielfältigen Ausgestaltungen verfügen. Derartige elektronische Druckluftaufbereitungseinrichtungen verfügen über eine mit dem CAN des Nutzfahrzeugs verbundene Steuereinheit, welche die vorgenannten pneumatischen Bauelemente unmittelbar als direkt elektrisch angesteuerte Ventile oder mittels Vorsteuerventilen ansteuert. Über Ausgänge der Kreisleitungen können an derartige elektronische Druckluftaufbereitungseinrichtungen unterschiedliche Kreise des Nutzfahrzeugs, insbesondere zwei Betriebsbremskreise, Nebenverbraucherkreise, ein Luftfederkreis, ein Anhängerbremskreis und/oder ein Feststellbremskreis, angeschlossen werden, wobei die Verbraucherkreise mit oder ohne Vorratsbehälter ausgebildet sein können. Mittels geeigneter Steueralgorithmen der Steuereinheit können gewünschte Funktionen gewährleistet werden, insbesondere
- eine zusätzliche Ansteuerung eines so genannten Energiesparkompressors oder einer Antriebskupplung des Kompressors,
- eine Druckreglung mittels Ansteuerung des Druckreglers,
- eine Variation der Last- und Regenerationsphasen über die Ansteuerung des Regenerationsventils,
- ein gezieltes Öffnen und Schließen der Mehrkreisschutzventile, beispielsweise um erst die Druckbeaufschlagung des Feststellbremskreises zu ermöglichen, wenn die Betriebsbremskreise hinreichend aufgefüllt sind, und/oder um eine Querspeisung eines Verbraucherkreises mit oder ohne Behälter aus einem anderen Verbraucherkreis zu ermöglichen, wobei die Querspeisung zum Gewährleisten eines Mindestdrucks unterbrochen werden kann,
- ein Auffüllen der Verbraucherkreise auf unterschiedliche Druckniveaus,
- eine Bildung von Gruppen von Verbraucherkreisen mit unterschiedlichen Befüll-Prioritäten und Befüllungsdrücken u. ä.

Während traditionell die Druckluftaufbereitungseinrichtung vorrangig die Befüllung und Gewährleistung der Drücke der Verbraucherkreise zum Gegenstand hatte, offenbart die Druckschrift EP 0 831 383 B1 eine Integration einer Sicherheitsfunktion für den Feststellbremskreis in die elektronische Druckluftaufbereitungseinrichtung. Hierzu wird vorgeschlagen, dass die Steuereinheit der elektronischen Druckluftaufbereitungseinrichtung ein Sperrsignal erzeugt, solange über den Betriebsbremskreisen zugeordnete Drucksensoren der elektronischen Druckluftaufbereitungseinrichtung erkannt wird, dass die Betriebsbremskreise noch nicht so weit aufgefüllt sind, dass die Federspeicher-Feststellbremse gelöst werden kann. Mittels des Sperrsignals wird dann ein dem Ausgang für den Feststellbremskreis vorgeordnetes Ventil abgesperrt, so dass selbst dann, wenn ein manuell betätigtes pneumatisches Handbremsventil in die Lösestellung überführt wird, eine Druckbeaufschlagung der Federspeicherkammer und damit ein Lösen der Federspeicher-Feststellbremse nicht möglich ist. Erst mit Überschreiten eines Drucks für eine Mindestverzögerung in den Betriebsbremskreisen wird das Sperrsignal beseitigt, womit das Ventil eine Durchlassstellung einnehmen kann und dann bei entsprechender manueller Betätigung des Handbremsventils die Federspeicher-Feststellbremse gelöst werden kann. Eine alternative Ausgestaltung aus der Druckschrift EP 0 831 383 B1 schlägt vor, das Sperrsignal der elektronischen Druckluftaufbereitungseinrichtung einem Ventil zuzuführen, welches nicht in die elektronische Druckluftaufbereitungseinrichtung integriert ist, sondern zwischen einen Vorratsbehälter des Feststellbremskreises und dem manuell betätigten pneumatischen Handbremsventil zwischengeordnet ist.

Bei derartigen elektronischen Druckluftaufbereitungseinrichtungen ist das manuell betätigte pneumatische Handbremsventil in der Fahrerkabine angeordnet, wozu erforderlich ist, dass pneumatische Leitungen in die Fahrerkabine geführt sind und von dem Handbremsventil zu den Federspeicher-Feststellbremsen geführt sind.

Die Druckschrift DE 602 08 804 T2 schlägt eine elektronische Steuerung des Feststellbremskreises vor, für welche lediglich ein elektronisches Betätigungsorgan wie ein Schalter in der Fahrerkabine angeordnet werden muss. Die in diesem Fall modular ausgestaltete elektronische Druckluftaufbereitungseinrichtung verfügt über ein Feststellbremsmodul, über welches eine elektronische Steuerung der Federspeicher-Feststellbremse ermöglich ist. Ein Ausgang dieses Moduls der elektronischen Druckluftaufbereitungseinrichtung, welcher unmittelbar mit der Federspeicher-Feststellbremse (ohne Zwischenschaltung eines Handbremsventils) verbunden ist, wird je nach Stellung eines be- und entlüftenden Ventils nach Maßgabe der Steuerung durch die Steuereinheit der Druckluftaufbereitungseinrichtung be- und entlüftet, womit das Aktivieren und Deaktivieren der Federspeicher-Feststellbremse mittels geeigneter Steueralgorithmen möglich ist.

Auch die Druckschrift EP 1 464 557 B2 offenbart eine elektronische Druckluftaufbereitungseinrichtung, in welche die Steuerung und die Steuerventile zum Be- und Entlüften eines Ausgangs, welcher unmittelbar mit der Federspeicherkammer der Federspeicher-Feststellbremsen gekoppelt ist, integriert sind. Hierbei offenbart EP 1 464 557 B2 eine elektromagnetische Vorsteuerung der für die Be- und Entlüftung verantwortlichen Ventile. Neben der direkten Verbindung des Ausgangs der Druckluftaufbereitungseinrichtung mit der Federspeicherkammer offenbart EP 1 464 557 B2 auch die Beaufschlagung der Federspeicherkammer über ein außerhalb der Druckluftaufbereitungseinrichtung angeordnetes Relaisventil, von welchem der Steuereingang über die genannten Be- und Entlüftungsventile angesteuert wird, während die Druckluftversorgung des Relaisventils ebenfalls über die Druckluftaufbereitungseinrichtung erfolgt. Für die in der Druckschrift EP 1 464 557 B2 dargestellten Ausführungsbeispiele hat ein Einbruch der elektrischen Leistungsversorgung der elektronischen Druckluftaufbereitungseinrichtung zur Folge, dass der der Federspeicher-Feststellbremse zugeordnete Ausgang bzw. der Steuerausgang für das Relaisventil entlüftet wird, womit automatisch die Betätigung der Federspeicher-Feststellbremsen erfolgt.

Hingegen offenbart die Druckschrift EP 1 785 325 B2 eine Ausführungsform einer elektronischen Druckluftaufbereitungseinrichtung, bei welcher ein Einbruch der elektrischen Leistungsversorgung zur Folge hat, dass ein vor diesem Einbruch eingenommener Betriebszustand der Federspeicher-Feststellbremsen beibehalten wird. Eine Veränderung des Betriebszustands der Federspeicher-Feststellbremsen erfordert hier zwingend das Vorliegen der elektrischen Leistungsversorgung. Gemäß der Druckschrift EP 1 785 325 B2 kann über die elektronische Druckluftaufbereitungseinrichtung auch eine so genannte Prüfstellung ermöglicht werden, in welcher die Federspeicher-Feststellbremsen eines Zugfahrzeugs betätigt werden, während die Bremsen des Anhängers nicht betätigt werden. Gesetzlich vorgeschrieben ist, dass in der Prüfstellung gewährleistet sein muss, dass die Federspeicher-Feststellbremsen des Zugfahrzeugs allein in der Lage sind, den aus dem Zugfahrzeug und dem Anhänger gebildeten Lastzug gebremst zu halten.

Auch die Druckschrift DE 10 2010 021 911 B4 offenbart eine elektronische Steuerung einer Federspeicher-Feststellbremse, bei welcher der Einbruch der elektrischen Leistungsversorgung zur Folge hat, dass ein eingenommener Betriebszustand der Federspeicher-Feststellbremsen beibehalten wird.

Die Druckschrift DE 10 2005 058 799 A1 offenbart eine elektropneumatische Bremssteuereinrichtung, bei welcher ein über ein Bremspedal vorgegebenes elektrisches Bremsbetätigungssignal von einer elektronischen Steuereinheit zur Ansteuerung von Magnetventilen genutzt wird, welche den Betriebsbremszylindern vorgeordnet sind. Zusätzlich betätigt das Bremspedal ein zweikreisig ausgeführtes pneumatisches Bremsventil. Bei einem Ausfall der elektrischen Steuerung der Bremsanlage, der hier als Redundanzfall bezeichnet ist, erfolgt eine Umschaltung auf eine Steuerung der Bremsanlage durch das über das Bremspedal bereitgestellte Drucksignal. Die Druckschrift schlägt vor, dass ein sicheres Abstellen des Fahrzeugs bei einem Totalausfall der elektrischen Leistungsversorgung dadurch ermöglicht wird, dass bei einem Ausfall der elektrischen Leistungsversorgung der Federspeicherteil des Federspeicher-Bremszylinders durch wiederholtes Betätigen des Bremspedals, welche eine sukzessive Entleerung der zugeordneten Vorratsbehälter zur Folge hat, dauerhaft entlüftet werden kann.

Gemäß der Druckschrift DE 102 51 249 A1 erfolgt eine elektropneumatische Steuerung einer Feststellbremsanlage eines Nutzfahrzeugs, wobei elektrische Leitungen in der Feststellbremsanlage redundant ausgeführt sind, so dass bei Ausfall einer elektrischen Leitung dennoch die Feststellbremsanlage über die andere redundante Leitung weiterbetreibbar ist.

Die Druckschrift DE 10 2008 003 379 A1 schlägt vor, bei einer vorhandenen Betriebsbremseinrichtung sowie Feststellbremseinrichtung in einem Fehlerfall einer der genannten Einrichtungen automatisch die Übernahme der Bremsfunktion durch die andere Einrichtung zu gewährleisten. Kommt es zu einem Ausfall der Feststellbremseinrichtung, erfolgt somit zunächst ein Feststellen des Fahrzeugs durch die Betriebsbremseinrichtung. Da mit der Betriebsbremseinrichtung keine dauerhafte Feststellbremsfunktion gewährleistet werden kann, muss der Fahrer weitere Maßnahmen zur dauerhaften Absicherung des Fahrzeugs ergreifen, was insbesondere durch Vorlegen von Keilen vor die Fahrzeugräder erfolgen kann.

Gemäß der Druckschrift DE 10 2008 014 458 A1 können für die Gewährleistung einer Feststellbremssteuerfunktion zwei redundante Elektroniken eingesetzt sein, so dass bei Ausfall einer der beiden Elektroniken dennoch ein sicheres Abstellen des Fahrzeugs über die Feststellbremssteuerfunktion der anderen Elektronik gewährleistet ist.

Die Druckschrift DE 10 2008 006 265 A1 betrifft ein Feststellbremssystem für ein Nutzfahrzeug, bei dem die Feststellbremse in ein Getriebe integriert ist, womit Druckleitungen zu den einzelnen Fahrzeugrädern eingespart werden können und anstelle von Federspeicher-Bremszylindern an den Fahrzeugrädern einfache Bremszylinder verwendet werden können. Die Betätigung der Feststellbremse des Getriebes erfolgt über eine Magnetventileinrichtung, welche redundant über zwei separate Versorgungsleitungen mit Druckluft versorgt werden kann. Eine Abbremsung des Fahrzeugs ist über ein Bremspedal möglich. Bei Ausfall des Bremspedals kann über eine Handsteuereinheit in der Fahrerkabine, die mit einem Getriebevorwahlgeber zusammengefasst ist, eine u. U. auch redundante Ansteuerung eines EBS-Steuergeräts erfolgen, womit auch eine Hilfsbremsunterstützung möglich ist. Über die Handsteuereinheit kann auch ein Fahrerwunsch bezüglich einer Betätigung der Feststellbremse des Getriebes als Signal an ein Anhängersteuermodul übertragen werden. In dem Getriebe ist ein Akkumulator angeordnet, der zumindest einen eingeschränkten Betrieb der Feststellbremse nach einem Stromausfall ermöglichen soll. Über den Akkumulator soll dann ein einmaliges Öffnen bzw. Schließen der Feststellbremse ermöglicht werden. Steht das Fahrzeug und wird zusätzlich eine Zündung des Fahrzeugs ausgestaltet, so soll der Akkumulator auch verwendet werden, um die Feststellbremse zu schließen, da in diesem Fall davon ausgegangen werden kann, dass das Fahrzeug abgestellt werden soll.

### AUFGABE DER ERFINDUNG

Der Erfindung liegt die Aufgabe zugrunde, eine elektropneumatische Feststellbremsanlage für ein Nutzfahrzeug vorzuschlagen, welche im Hinblick auf die Bauraumgestaltung sowie auf das Verhalten und/oder Eingriffsmöglichkeiten im Fall eines Einbruchs der elektrischen Leistungsversorgung verbessert ist.

### LÖSUNG

Die Aufgabe der Erfindung wird erfindungsgemäß mit den Merkmalen des unabhängigen Patentanspruchs gelöst. Weitere bevorzugte erfindungsgemäße Ausgestaltungen sind den abhängigen Patentansprüchen zu entnehmen.

### BESCHREIBUNG DER ERFINDUNG

Erfindungsgemäß verfügt die elektropneumatische Feststellbremsanlage über zwei elektropneumatische Feststellbrems-Steuerkreise, so dass die elektropneumatische Feststellbremsanlage redundant ausgebildet ist. Ein erster elektropneumatischer Feststellbrems-Steuerkreis, welcher in einem "Normalfall" mit einer vorliegenden oder intakten ersten Leistungsversorgung genutzt wird, verfügt über eine Feststellbremsen-Betätigungseinheit, welche manuell vom Fahrer betätigt werden kann, um einen Feststellbrems-Betätigungswunsch vorzugeben. Hierbei kann es sich um einen Schalter, Schieber, Hebel o. ä. handeln. Bei dem über die Feststellbremsen-Betätigungseinheit vorgebbaren Fahrerwunsch kann es sich um den Wunsch nach einer beliebigen Betriebsstellung der Feststellbremsen handeln, beispielsweise dem Lösen der Feststellbremse, dem Betätigen der Feststellbremse, der Durchführung einer abgestuften Hilfsbremsung, die Aktivierung eines Hillholders, die Durchführung einer Prüffunktion, einer Streckbremsfunktion u. ä.

Die Bearbeitung dieses über die Feststellbremsen-Betätigungseinheit vorgegebenen Fahrerwunsches erfolgt auf elektropneumatischem Weg unter Einsatz eines Magnetventils. Bei vorhandener erster Leistungsversorgung ist die Betriebsstellung des Magnetventils von dem elektrischen Betätigungssignal, welches von der Feststellbremsen-Betätigungseinheit erzeugt wird, abhängig. Das Magnetventil steuert dann die pneumatische Beaufschlagung einer Federspeicher-Feststellbremse entsprechend dem Fahrerwunsch. Hierbei kann das genannte Magnetventil unmittelbar die pneumatische Beaufschlagung der Federspeicher-Feststellbremse steuern oder mittelbar, indem das Magnetventil beispielsweise als Vorsteuerventil eines luftmengenverstärkenden Relaisventils ausgebildet ist.

Fällt der erste elektropneumatische Feststellbrems-Steuerkreis aus, insbesondere infolge eines Ausfalls der ersten elektrischen Leistungsversorgung oder bei Unterbrechung der elektrischen Signalübertragung, kann über den zweiten elektropneumatischen Feststellbrems-Steuerkreis die pneumatische Beaufschlagung der Federspeicher-Feststellbremse gesteuert werden. Hierbei verfügt der zweite elektropneumatische Feststellbrems-Steuerkreis über eine zweite Leistungsversorgung, welche auch dann elektrische Leistung bereitstellt, wenn die erste elektrische Leistungsversorgung nicht vorhanden ist.

Erfindungsgemäß ist die zweite elektrische Leistungsversorgung nicht an irgendeiner Stelle des Nutzfahrzeugs, insbesondere im Bereich eines Getriebes, wie dies gemäß DE 10 2008 006 265 A1 der Fall ist, angeordnet, sondern vielmehr in der Fahrerkabine angeordnet. Durch diese Ausgestaltung ist die zweite elektrische Leistungsversorgung gut für den Fahrer zugänglich, was für eine Überwachung, eine Montage, einen Austausch, eine Wartung, eine Prüfung, ein Nachladen und/oder eine etwaige manuelle Betätigung der zweiten elektrischen Leistungsversorgung von Vorteil sein kann. Andererseits ist u. U. die zweite elektrische Leistungsversorgung in der Fahrerkabine einem anderen Temperaturprofil ausgesetzt als wenn diese im Bereich des Getriebes oder an anderer Stelle außerhalb der Fahrerkabine angeordnet ist.

In bevorzugter Weiterbildung dieses Gedankens ist die zweite elektrische Leistungsversorgung in die Feststellbremsen-Betätigungseinheit integriert.

Im Rahmen der vorliegenden Erfindung wird unter eine "*Steuerung*" der Federspeicher-Feststellbremse auch eine Regelung subsumiert. Bei der ersten elektrischen Leistungsversorgung handelt es sich vorzugsweise um die Batterie des Nutzfahrzeugs und/oder einen Generator oder eine Lichtmaschine des Nutzfahrzeugs.

Grundsätzlich möglich ist, dass in dem ersten Feststellbrems-Steuerkreis und in dem zweiten Feststellbrems-Steuerkreis die Steuerung der pneumatischen Beaufschlagung der Federspeicher-Feststellbremse zumindest teilweise über unterschiedliche Magnetventile erfolgt. In bevorzugter Ausgestaltung der Erfindung erfolgt die Steuerung der pneumatischen Beaufschlagung in den beiden Feststellbrems-Steuerkreisen aber unter Einsatz desselben Magnetventils, womit der Bauaufwand durch Reduzierung der Zahl der erforderlichen Magnetventile und der erforderlichen elektrischen und/oder pneumatischen Leitungsverbindungen verringert werden kann.

Grundsätzlich kann die zweite elektrische Leistungsversorgung, welche in die Fahrerkabine oder die Feststellbremsen-Betätigungseinheit integriert ist, beliebig ausgebildet sein. Entsprechend einem ersten erfindungsgemäßen Vorschlag ist die zweite elektrische Leistungsversorgung als Batterie oder Akkumulator ausgebildet. Hierbei kann der Akkumulator unabhängig von der ersten elektrischen Leistungsversorgung wieder aufgeladen werden. Durchaus möglich ist aber auch, dass das Wiederaufladen des Akkumulators über die erste elektrische Leistungsversorgung, insbesondere die Fahrzeugbatterie, einen Generator oder eine Lichtmaschine des Fahrzeugs, erfolgt, solange gewährleistet ist, dass der Akkumulator bei Ausfall der ersten elektrischen Leistungsversorgung Leistung für den Betrieb des zweiten elektropneumatischen Feststellbrems-Steuerkreises zur Verfügung stellt.

Möglich ist, dass eine Überwachungseinrichtung vorhanden ist, welche den Ladezustand der Batterie oder des Akkumulators überwacht. Detektiert die Überwachungseinrichtung, dass der Ladezustand der Batterie oder des Akkumulators nicht ausreichend ist, kann eine geeignete Anzeige oder ein geeignetes Signal für den Fahrer erzeugt werden, damit dieser eine Batterie austauscht oder ein Nachladen des Akkumulators herbeiführt.

Gemäß einem zweiten Vorschlag der Erfindung ist die zweite elektrische Leistungsversorgung als Generator ausgebildet, welcher von dem Fahrer manuell betrieben werden kann. Hierfür gibt es vielfältige Möglichkeiten. Um lediglich ein nicht-beschränkendes Beispiel zu nennen, kann der Fahrer durch manuelle Verschwenkung eines Hebels der Feststellbremsen-Betätigungseinheit einen Dynamo oder Generator betreiben, welcher dann die Leistung bereitstellt.

Hierbei ist durchaus möglich, dass der von dem Fahrer betriebene Generator über ein Betätigungselement verfügt, welches ausschließlich zur Bereitstellung der zweiten elektrischen Leistungsversorgung benutzt wird, indem dieses manuell betätigt wird. Möglich ist durchaus auch, dass ein im Normalfall für andere Zwecke genutztes Betätigungselement, beispielsweise ein Betätigungshebel für die Vorgabe des Fahrerwunsches bei Nutzung des ersten elektropneumatischen Feststellbrems-Steuerkreises, multifunktional genutzt wird, indem dieses Betätigungselement bei Entfall der ersten elektrischen Leistungsversorgung automatisch für den Betrieb des Generators genutzt wird. Um lediglich ein nicht-beschränkendes Beispiel zu nennen, kann der Betätigungshebel über eine Kupplung mit dem Generator gekoppelt sein, welche bei Vorliegen der ersten elektrischen Leitungsversorgung elektrisch geöffnet wird, aber federbeaufschlagt geschlossen wird bei Entfall der ersten elektrischen Leistungsversorgung. In diesen und anderen Fällen ist es vorteilhaft, wenn der Generator zur zweiten elektrischen Leistungsversorgung automatisch mit dem Entfall der ersten elektrischen Leistungsversorgung aktivierbar ist.

Für einen dritten Vorschlag der Erfindung verfügt der zweite Feststellbrems-Steuerkreis über einen manuell betätigbaren Impulsgeber. Um lediglich ein nicht beschränkendes Beispiel zu nennen, kann es sich bei dem Impulsgeber um ein Piezoelement handeln, welches über ein manuelles Betätigungselement mit einem Impuls oder einer Kraft beaufschlagt wird und diese manuelle Vorgabe umwandelt in ein elektrisches Impulssignal. Der zweite Feststellbrems-Steuerkreis verfügt des Weiteren über einen Treibsatz, welcher über einen Impuls des Impulsgebers aktivierbar ist. Die Aktivierung des Treibsatzes führt zur Zündung desselben, womit Energie bereitgestellt ist, welche dann als zweite elektrische Leistungsversorgung genutzt wird. Über die Zündung des Treibsatzes ist dann eine Entlüftungsstellung eines die Federspeicher-Feststellbremse entlüftenden Ventils (bei dem es sich um das zuvor genannte Magnetventil oder ein anderes Ventil handeln kann) herbeiführbar.

Für die grundsätzliche Ausgestaltung der Feststellbremsanlage mit den beiden Feststellbrems-Steuerkreisen gibt es vielfältige Möglichkeiten. Für eine besondere erfindungsgemäße Feststellbremsanlage kommuniziert die Feststellbremsen-Betätigungseinheit mit einer Druckluftaufbereitungseinrichtung, was beispielsweise über eine elektrische Leitung, ein Bussystem u. ä. erfolgen kann. Möglich ist, dass in die Druckluftaufbereitungseinrichtung ein Ventil, welches in einer Entlüftungsstellung die Federspeicher-Feststellbreme entlüftet und/oder das zuvor genannte Magnetventil, über welches die Druckbeaufschlagung der Federspeicher-Feststellbremse steuerbar ist, integriert ist. Hierdurch ergibt sich eine besonders kompakte Feststellbremsanlage, deren Montage auch vereinfacht ist, da ausschließlich die Feststellbremsen-Betätigungseinheit sowie die Druckluftaufbereitungseinrichtung am Fahrzeug zu montieren sind und die zugeordneten Leitungsverbindungen herzustellen sind. Möglich ist hierbei, dass sämtliche Funktionen der Feststellbremsanlage in die Druckluftaufbereitungseinrichtung integriert sind, so dass die Druckluftaufbereitungseinrichtung unmittelbar über pneumatische Leitungsverbindungen, ggf. unter Zwischenschaltung eines luftmengenverstärkenden Relaisventils, mit den Federspeicherbremszylindern verbunden ist.

Durchaus möglich ist, dass im Rahmen der Erfindung sowohl der erste als auch der zweite elektropneumatische Feststellbrems-Steuerkreis als aktiver Steuerkreis mit einer elektronischen Steuereinheit ausgebildet sind. Bevorzugt ist aber der zweite elektropneumatische Feststellbrems-Steuerkreis vereinfacht ausgebildet, indem dieser als passiver Steuerkreis ausgebildet ist, in welchem eine elektronische Steuereinheit nicht vorhanden ist. Um lediglich ein nicht-beschränkendes Beispiel zu nennen, kann in dem zweiten elektropneumatischen Feststellbrems-Steuerkreis über die Feststellbremsen-Betätigungseinheit ein Schalter geschlossen werden, welcher unmittelbar eine Verbindung zwischen der zweiten elektrischen Leistungsversorgung, beispielsweise einer Batterie oder einem Akkumulator, und dem Magnetventil herstellt, womit das Umschalten des Magnetventils in die gewünschte Stellung, insbesondere eine Entlüftungsstellung, verursacht werden kann. Eine derartige Ausgestaltung des zweiten elektropneumatischen Feststellbrems-Steuerkreises als passiver Steuerkreis ist vorteilhaft hinsichtlich des Bauaufwands und der Betriebssicherheit bei Ausfall der ersten elektrischen Leistungsversorgung.

Durchaus möglich ist, dass die Möglichkeiten der Steuerung der Beaufschlagung der Federspeicher-Feststellbremse in beiden Feststellbrems-Steuerkreisen gleich sind, so dass bei Ausfall der ersten elektrischen Leistungsversorgung über den zweiten elektropneumatischen Feststellbrems-Steuerkreis die volle Funktionalität erhalten bleibt. Für einen weiteren erfindungsgemäßen Vorschlag sind allerdings in dem zweiten Feststellbrems-Steuerkreis die Möglichkeiten für die Steuerung der Beaufschlagung der Federspeicher-Feststellbremse reduziert gegenüber den Möglichkeiten für die Steuerung der Beaufschlagung der Federspeicher-Feststellbremse mit dem ersten Feststellbrems-Steuerkreis. Im Extremfall kann dies bedeuten, dass in dem zweiten Feststellbrems-Steuerkreis lediglich die Aktivierung der Feststellbremse, sei es während der Fahrt zur Herbeiführung einer Notbremsung und/oder für zuvor abgebremstes Fahrzeug zum Parken desselben, möglich ist.

In weiterer Ausgestaltung der erfindungsgemäßen Feststellbremsanlage erfolgt in dem ersten Feststellbrems-Steuerkreis eine Übertragung eines elektrischen Betätigungssignals durch ein Bussystem, während in dem zweiten Feststellbrems-Steuerkreis eine Übertragung eines elektrischen Betätigungssignals ohne Nutzung des Bussystems erfolgt. Hierbei kann in dem zweiten Feststellbrems-Steuerkreis ein anderes Bussystem verwendet werden. Vorzugsweise findet allerdings in dem zweiten Feststellbrems-Steuerkreis eine direkte elektrische Leitungsverbindung ohne Einsatz eines Bussystems Einsatz, wobei diese direkte Leitungsverbindung als unidirektionale oder bidirektionale Verbindung ausgebildet sein kann.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Magnetventil oder einer Leistungsquelle die Rede ist, ist dies so zu verstehen, dass genau ein Magnetventil oder eine Leistungsquelle, zwei Magnetventile oder zwei Leistungsquellen oder mehr Magnetventile oder einer Leistungsquellen vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt schematisch eine elektropneumatische Feststellbremsanlage mit einer Batterie, die in eine Feststellbremsen-Betätigungseinheit integriert ist.
- **Fig. 2**: zeigt schematisch eine elektropneumatische Feststellbremsanlage, bei welcher die Batterie extern von der Feststellbremsen-Betätigungseinheit angeordnet ist.
- **Fig. 3**: zeigt schematisch eine elektropneumatische Feststellbremsanlage, bei welcher eine zweite elektrische Leistungsversorgung als Generator ausgebildet ist, welcher in die Feststellbremsen-Betätigungseinheit integriert ist.
- **Fig. 4**: zeigt schematisch eine elektropneumatische Feststellbremsanlage, bei welcher ein Generator, welcher die zweite elektrische Leistungsversorgung bildet, extern von der Feststellbremsen-Betätigungseinheit angeordnet ist.
- **Fig. 5**: zeigt schematisch eine elektropneumatische Feststellbremsanlage, bei welcher die zweite elektrische Leistungsversorgung mit einem Impulsgeber und einem Treibsatz gebildet ist.

### FIGURENBESCHREIBUNG

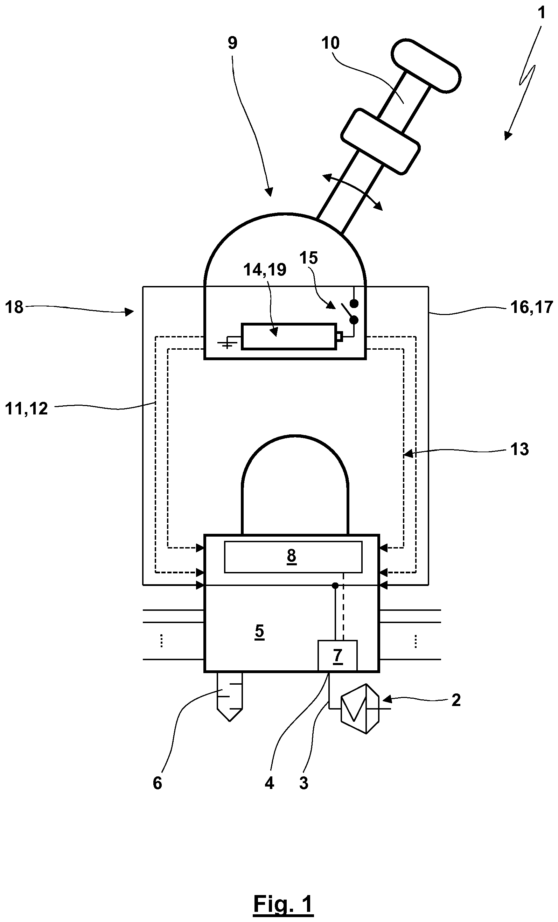

**Fig. 1** zeigt schematisch eine elektropneumatische Feststellbremsanlage 1 für ein Nutzfahrzeug, insbesondere ein Zugfahrzeug und/oder einen Anhänger. Die Feststellbremsanlage 1 verfügt über mehrere Federspeicher-Feststellbremsen, welche auch als Kombi-Bremszylinder zur Bereitstellung einer Betriebsbremse sowie der Federspeicher-Feststellbremse ausgebildet sein können. Zwecks Vereinfachung ist in den Figuren ausschließlich eine Federspeicher-Feststellbremse 2 dargestellt. Die Federspeicher-Feststellbremse 2 nimmt im entlüfteten Zustand infolge der Beaufschlagung durch eine Feder eine Brems- oder Parkstellung ein, während diese mit einer Belüftung gelöst werden kann. Für das dargestellte Ausführungsbeispiel ist die Federspeicher-Feststellbremse 2 über eine pneumatische Leitung 3 direkt ohne Zwischenschaltung weiterer pneumatischer Bauelemente oder Schaltelemente mit einem Anschluss 4 einer Druckluftaufbereitungseinrichtung 5, die hier als singuläre Baueinheit mit einem einzigen Gehäuse oder als modulare Baueinheit ausgebildet ist, verbunden.

Die Druckluftaufbereitungseinrichtung 5 ist in an sich üblicher Weise ausgebildet. So wird diese beispielsweise über einen Kompressor mit Druckluft versorgt, wobei die Druckluft über einen in die Druckluftaufbereitungseinrichtung 5 integrierten Lufttrockner getrocknet wird. Stromabwärts des Lufttrockners erfolgt die Bereitstellung von Druckluft für mehrere Verbraucherkreise, insbesondere zwei Betriebsbremskreisen, einen Nebenverbraucherkreis, einen Luftfederkreis u. ä., wobei die vorgenannten Kreise mit oder ohne Vorratsbehälter ausgebildet sein können. Hierbei sind in den Zweigleitungen der Druckluftaufbereitungseinrichtung 5 zu den Verbraucherkreisen Mehrkreisschutzventile angeordnet, welche insbesondere eine Vorgabe der Reihenfolge der Befüllung der Kreise, eine Druckbegrenzung, eine Drucksicherung, eine Ermöglichung einer Querbefüllung oder Querversorgung zwischen einzelnen Verbraucherkreisen unter Gewährleistung eines Mindestdrucks u. ä. gewährleisten. Des Weiteren kann in die Druckluftaufbereitungseinrichtung 5 ein Druckregler integriert sein, wobei eine Druckregelung und/oder-begrenzung über die Steuerung des Kompressors erfolgen kann oder durch Abfuhr der von dem Kompressor geförderten Druckluft über eine Entlüftung 6 in die Umgebung. Schließlich ermöglicht die Druckluftaufbereitungseinrichtung 5 eine Regeneration des Lufttrockners, bei dem zuvor gereinigte Druckluft aus einem Verbraucherkreis oder einem separaten Regenerationsbehälter rückwärts durch den Lufttrockner geführt wird, wo die zuvor getrocknete Druckluft Feuchtigkeit aus dem Trocknungsmaterial aufnimmt, und über die Entlüftung 6 in die Umgebung abgeführt wird. Die Druckluftaufbereitungseinrichtung 5 verfügt über eine elektronische Steuereinheit, welche die genannten Funktionen durch Ansteuerung der beteiligten pneumatischen Bauelemente, insbesondere von Magnetventilen für die Druckregelung, die Mehrkreisschutzventile und die Regeneration, gewährleistet. Hinsichtlich weiterer Details zu Druckluftaufbereitungseinrichtungen 5 wird grundsätzlich auf den umfangreichen diesbezüglichen Stand der Technik und seitens der Anmelderin vertriebene Druckluftaufbereitungseinrichtungen verwiesen.

Im Rahmen der vorliegenden Erfindung ist in die Druckluftaufbereitungseinrichtung 5 ein Magnetventil 7 integriert, welches die pneumatische Beaufschlagung der Federspeicher-Feststellbremse 2 steuert. Hierbei ist das Magnetventil 7 durch die Steuereinheit 8 der Druckluftaufbereitungseinrichtung 5 elektrisch gesteuert. Im einfachsten Fall handelt es sich bei dem Magnetventil 7 um ein 3/2-Wegeventil, welches eine Belüftungsstellung sowie eine Entlüftungsstellung besitzt, womit die Belüftung und Entlüftung der Federspeicher-Feststellbremse 2 möglich ist. Hierbei sind in den schematischen Figuren die weiteren pneumatischen Leitungen und Bauelemente für die Be- und Entlüftung nicht dargestellt. Durchaus möglich ist der Einsatz eines beliebigen anderen Magnetventils, insbesondere mit abweichenden Ventilstellungen und/oder abweichender Anzahl der Ventilstellungen. Möglich ist auch, dass das Magnetventil 7 durch die Steuereinheit 8 getaktet oder als pulsweitenmoduliertes Ventil betrieben wird, womit auch eine abgestufte Hilfsbremsung über die Federspeicher-Feststellbremse 2 möglich ist.

Die elektropneumatische Feststellbremsanlage 1 verfügt über eine Feststellbremsen-Betätigungseinheit 9, über welche ein Fahrer einen Fahrerwunsch hinsichtlich eines Betriebszustands der Federspeicher-Feststellbremse 2 vorgeben kann. Beispielsweise kann der Benutzer über die Feststellbremsen-Betätigungseinheit 9 einen Betriebszustand "Federspeicher-Feststellbremse gelöst", "Federspeicher-Feststellbremse aktiviert", "abgestufte Hilfsbremsung" (mit Vorgabe des Ausmaßes der Hilfsbremsung), "Streckbremsfunktion" oder "Prüffunktion" vorgeben. Für das dargestellte Ausführungsbeispiel erfolgt die Vorgabe über einen Betätigungshebel 10 der Feststellbremsen-Betätigungseinheit, welcher für unterschiedliche Fahrerwünsche in unterschiedliche Schwenkstellungen bewegbar ist. Über eine erste Leitung 11 kann je nach Betriebsstellung des Betätigungshebels 10 ein Fahrerwunsch über ein elektrisches Betätigungssignal 12 an die Steuereinheit 8 der Druckluftaufbereitungseinrichtung 5 übermittelt werden, wobei die Steuereinheit 8 dann entsprechend dem Fahrerwunsch und dem dieses repräsentierenden elektrischen Betätigungssignals 12 über die Ansteuerung des Magnetventils 7 in der Federspeicher-Feststellbremse 2 den gewünschten Betriebszustand herbeiführt. Vorzugsweise handelt es sich bei der ersten Leitung 11 um ein Bussystem oder CAN. Mit der Feststellbremsen-Betätigungseinheit 9, der ersten Leitung 11, der Steuereinheit 8 und dem Magnetventil 7 ist ein erster elektropneumatischer Feststellbrems-Steuerkreis 13 gebildet, welcher in Figur 1 mit gestrichelten elektrischen Leitungsverbindungen dargestellt ist und über welchen im Normalfall die Steuerung der Druckbeaufschlagung der Federspeicher-Feststellbremse 2 erfolgt. In besonderen Betriebssituationen kann die Ansteuerung der Federspeicher-Feststellbremse 2 auch unabhängig von einem elektrischen Betätigungssignal 12 erfolgen, was beispielsweise der Fall sein kann bei einer Herbeiführung einer Notbremsung durch die Steuereinheit 8, wenn von dieser eine Notbremssituation erkannt wird.

In dem ersten elektropneumatischen Feststellbrems-Steuerkreis 13 erfolgt eine elektrische Leistungsversorgung über eine erste elektrische Leistungsversorgung, welche hier nicht dargestellt ist und beispielsweise als Fahrzeugbatterie, Generator oder Lichtmaschine des Fahrzeugs und/oder elektrische Leistungsversorgung der Druckluftaufbereitungseinrichtung 5 ausgebildet ist.

In die Feststellbremsen-Betätigungseinheit 9 ist eine Batterie oder ein Akkumulator 14 integriert. Die Batterie oder der Akkumulator 14 ist über einen Schalter 15 und eine zweite Leitung 16 zur Vorgabe eines zweiten elektrischen Betätigungssignals 17 mit der Druckluftaufbereitungseinrichtung 5 verbunden. Hierbei wird der Schalter 15 von der Feststellbremsen-Betätigungseinheit 9 betätigt. Die Betätigung des Schalters 15 kann über den Betätigungshebel 10 erfolgen, wobei der Schalter 15 im üblichen Stellbereich des Betätigungshebels 10 während des normalen Betriebs mit Steuerung durch den ersten elektropneumatischen Feststellbrems-Steuerkreis 13 betätigt werden kann oder in einer Betriebsstellung des Betätigungshebels 10, welche während des normalen Betriebs des ersten Feststellbrems-Steuerkreises 13 nicht eingenommen wird, betätigt wird. Möglich ist, dass für die Betätigung des Schalters 15 ein zusätzliches Betätigungselement jedweder Form an der Feststellbremsen-Betätigungseinheit 9 vorgesehen sein kann.

Mit der Batterie oder dem Akkumulator 14, dem Schalter 15, der zweiten Leitung 16 ist ein zweiter elektropneumatischer Feststellbrems-Steuerkreis 18 gebildet, dessen elektrische Leitungen in Figur 1 mit durchgezogenen Linien dargestellt sind und in dem eine elektrische Leistungsversorgung (unabhängig von dem ersten Feststellbrems-Steuerkreis 13) direkt und ohne Zwischenschaltung einer elektronischen Steuereinheit über die Batterie oder den Akkumulator 14 erfolgt, der damit die zweite elektrische Leistungsversorgung 19 bildet. Im einfachsten Fall wird das zweite elektrische Betätigungssignal 17 für einen Ausfall der ersten elektrischen Leistungsversorgung in dem Feststellbrems-Steuerkreis 13 passiv in der Druckluftaufbereitungseinrichtung 5 (ohne Zwischenschaltung aktiver Steuerelemente, einer Steuereinrichtung o. ä.) einem Steuereingang des Magnetventils 7 zugeführt, womit das Magnetventil 7 über den zweiten Feststellbrems-Steuerkreis 18 je nach Stellung des Schalters 15 gesteuert werden kann.

Für intakten ersten Feststellbrems-Steuerkreis 13 hat dieser eine Priorität gegenüber dem zweiten Feststellbrems-Steuerkreis 18. Dies kann dadurch gewährleistet werden, dass mit vorliegender erster elektrischer Leistungsversorgung in dem ersten Feststellbrems-Steuerkreis 13 die Steuereinheit 8 den zweiten Feststellbrems-Steuerkreis 18 deaktiviert, beispielsweise indem ein Schalter oder ein Relais, welcher oder welches in den zweiten Feststellbrems-Steuerkreis 18 integriert ist, von der Steuereinheit 8 in eine Sperrstellung überführt wird. Dieser Schalter oder das Relais kann dann mit Einbruch der ersten elektrischen Leistungsversorgung automatisch umgeschaltet werden, womit der zweite Feststellbrems-Steuerkreis 18 aktiviert wird.

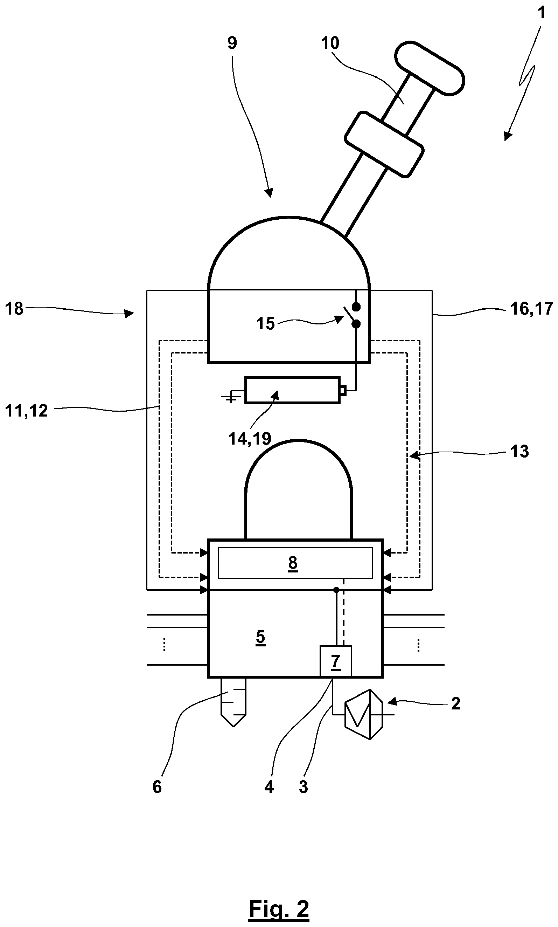

Für das in **Fig. 2** dargestellte Ausführungsbeispiel ist die Batterie oder der Akkumulator 14 nicht in die Feststellbremsen-Betätigungseinheit 9 integriert, sondern vielmehr außerhalb derselben angeordnet. Beispielsweise kann die Batterie oder der Akkumulator 14 in der Fahrerkabine angeordnet sein, insbesondere seitlich eines Sitzes im Griffbereich des Fahrers oder in oder unter einer Instrumententafel.

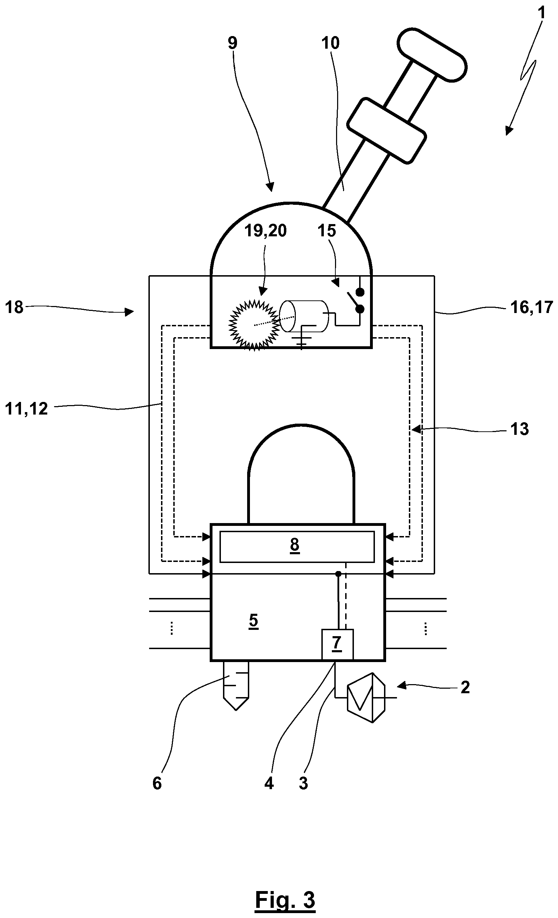

Gemäß **Fig. 3** ist die zweite elektrische Leistungsversorgung 19 entsprechend Fig. 1 in die Feststellbremsen-Betätigungseinheit 9 integriert. Allerdings ist hier die zweite elektrische Leistungsversorgung 19 nicht als Batterie oder Akkumulator 14 ausgebildet. Vielmehr ist die zweite elektrische Leistungsversorgung 19 mit einem Generator 20 gebildet. Der Generator 20 wandelt eine manuell herbeigeführte Bewegung eines Antriebselements des Generators 20, hier des Betätigungshebels 10, um in elektrische Energie, welche dann als zweites elektrisches Betätigungssignal 17 genutzt wird, um eine gewünschte Betriebsstellung des Magnetventils 7 herbeizuführen und damit die pneumatische Beaufschlagung der Federspeicher-Feststellbremse 2 zu steuern. Eine einmal durch Betrieb des Generators 20 hervorgerufene gewünschte Betriebsstellung des Magnetventils 7 wird vorzugsweise auch bei Entfall der Leistungsversorgung durch den Generator beibehalten.

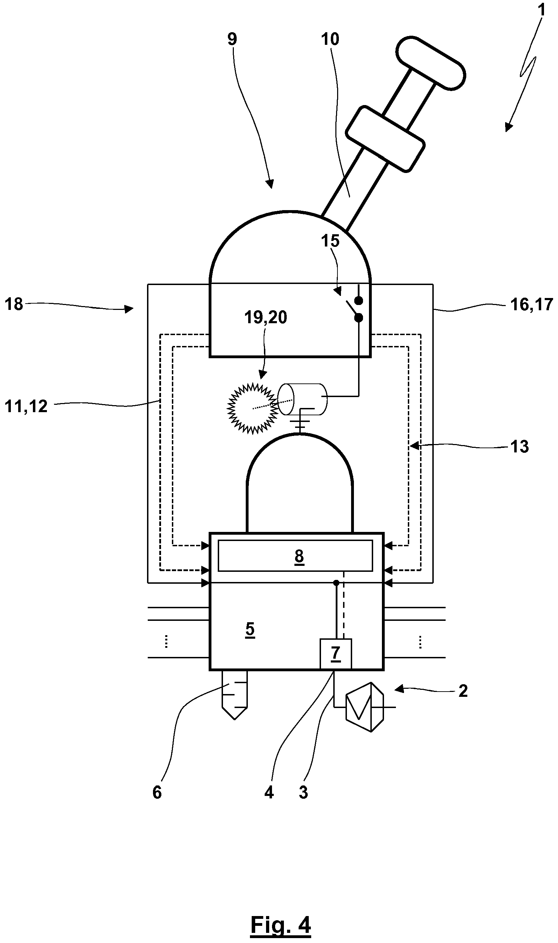

**Fig. 4** zeigt eine entsprechende Ausgestaltung, wobei hier allerdings der Generator 20 außerhalb der Feststellbremsen-Betätigungseinheit 9, aber innerhalb der Fahrerkabine angeordnet ist.

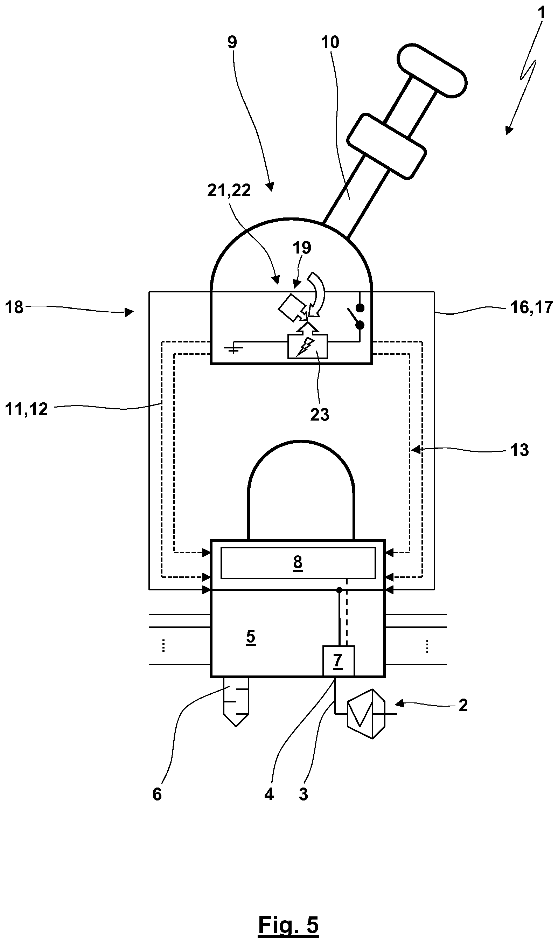

Gemäß **Fig. 5** findet als zweite elektrische Leistungsversorgung 19 ein Impulsgeber 21 Einsatz. Beispielsweise kann vom Fahrer manuell ein Betätigungselement, hier der Betätigungshebel 10, impulsartig ein Piezoelement 22 beaufschlagen, welches dann einen Treibsatz 23 aktiviert, dessen Energie dann zur elektrischen Leistungsversorgung des zweiten Feststellbrems-Steuerkreises 18 verwendet wird.

### BEZUGSZEICHENLISTE

- 1: elektropneumatische Feststellbremsanlage
- 2: Federspeicher-Feststellbremse
- 3: Leitung
- 4: Anschluss
- 5: Druckluftaufbereitungseinrichtung
- 6: Entlüftung
- 7: Magnetventil
- 8: Steuereinheit
- 9: Feststellbremsen-Betätigungseinheit
- 10: Betätigungshebel
- 11: erste Leitung
- 12: erstes elektrisches Betätigungssignal
- 13: erster elektropneumatischer Feststellbrems-Steuerkreis
- 14: Batterie oder Akkumulator
- 15: Schalter
- 16: zweite Leitung
- 17: zweites elektrisches Betätigungssignal
- 18: zweiter elektropneumatischer Feststellbrems-Steuerkreis
- 19: zweite elektrische Leistungsversorgung
- 20: Generator
- 21: Impulsgeber
- 22: Piezoelement
- 23: Treibsatz

## Patentansprüche

1. Elektropneumatische Feststellbremsanlage (1) für ein Nutzfahrzeug mit
a) einem ersten elektropneumatischen Feststellbrems-Steuerkreis (13) mit
aa) einer manuell vom Fahrer betätigten Feststellbremsen-Betätigungseinheit (9), welche ein von der Betätigung durch den Fahrer beeinflussbares erstes elektrisches Betätigungssignal (12) erzeugt,
ab) einem Magnetventil (7), über welches die pneumatische Beaufschlagung einer Federspeicher-Feststellbremse (2) steuerbar ist,
ac) wobei bei einer vorhandenen ersten elektrischen Leistungsversorgung des ersten elektropneumatischen Feststellbrems-Steuerkreises (13) die Betriebsstellung des Magnetventils (7) von dem elektrischen Betätigungssignal (12) der Feststellbremsen-Betätigungseinheit (9) abhängig ist,
und
b) einem zweiten elektropneumatischen Feststellbrems-Steuerkreis (18), der über eine zweite elektrische Leistungsversorgung (19) verfügt,
**dadurch gekennzeichnet, dass**
c) über den zweiten elektropneumatischen Feststellbrems-Steuerkreis (18) bei Ausfall des ersten elektropneumatischen Feststellbrems-Steuerkreises (13) über die Feststellbremsen-Betätigungseinheit (9) die pneumatische Beaufschlagung der Federspeicher-Feststellbremse (2) steuerbar ist,
d) wobei die zweite elektrische Leistungsversorgung (19) in einer Fahrerkabine des Nutzfahrzeugs angeordnet ist.

2. Feststellbremsanlage (1) nach Anspruch 1, **dadurch gekennzeichnet, dass** die zweite elektrische Leistungsversorgung (19) in die Feststellbremsen-Betätigungseinheit (9) integriert ist.

3. Feststellbremsanlage (1) nach Anspruch 1, **dadurch gekennzeichnet, dass** in dem ersten Feststellbrems-Steuerkreis (13) und in dem zweiten Feststellbrems-Steuerkreis (18) die Steuerung der pneumatischen Beaufschlagung der Federspeicher-Feststellbremse (2) über dasselbe Magnetventil (7) erfolgt.

4. Feststellbremsanlage (1) nach einem der vorhergehenden Ansprüche, **dadurch gekennzeichnet, dass** die zweite elektrische Leistungsversorgung (19) als Batterie oder Akkumulator (14) ausgebildet ist.

5. Feststellbremsanlage (1) nach Anspruch 3, **dadurch gekennzeichnet, dass** eine Überwachungseinrichtung vorhanden ist, welche den Ladezustand der Batterie oder des Akkumulators (14) überwacht.

6. Feststellbremsanlage (1) nach einem der vorhergehenden Ansprüche, **dadurch gekennzeichnet, dass** die zweite elektrische Leistungsversorgung (19) als ein von dem Fahrer betriebener Generator (20) ausgebildet ist.

7. Feststellbremsanlage (1) nach Anspruch 5, **dadurch gekennzeichnet, dass** der Generator (20) automatisch mit dem Entfall der ersten elektrischer Leistungsversorgung aktivierbar ist.

8. Feststellbremsanlage (1) nach einem der vorhergehenden Ansprüche, **dadurch gekennzeichnet, dass**
a) der zweite Feststellbrems-Steuerkreis (18)
aa) einen manuell betätigbaren Impulsgeber (21) und
ab) einen Treibsatz (23), welcher über einen Impuls des Impulsgebers (21) aktivierbar ist,
besitzt, und
b) eine Entlüftungsstellung eines die Federspeicher-Feststellbremse (2) entlüftenden Ventils oder des Magnetventils (7) über die Zündung des Treibsatzes (23) herbeiführbar ist.

9. Feststellbremsanlage (1) nach einem der vorhergehenden Ansprüche, **dadurch gekennzeichnet, dass** die Feststellbremsen-Betätigungseinheit (9) mit einer Druckluftaufbereitungseinrichtung (5) kommuniziert, in welche vorzugsweise das Ventil, welches in einer Entlüftungsstellung die Federspeicher-Feststellbremse (2) entlüftet, und/oder das Magnetventil (7), über welche die Druckbeaufschlagung der Federspeicher-Feststellbremse (2) steuerbar ist, integriert sind/ist.

10. Feststellbremsanlage (1) nach einem der vorhergehenden Ansprüche, **dadurch gekennzeichnet, dass** der zweite elektropneumatische Feststellbrems-Steuerkreis (18) als passiver Steuerkreis ohne eine elektronische Steuereinheit ausgebildet ist.

11. Feststellbremsanlage (1) nach einem der vorhergehenden Ansprüche, **dadurch gekennzeichnet, dass** der zweite Feststellbrems-Steuerkreis (18) über einen Schalter (15) manuell aktivierbar ist.

12. Feststellbremsanlage (1) nach einem der vorhergehenden Ansprüche, **dadurch gekennzeichnet, dass** in dem zweiten Feststellbrems-Steuerkreis (18) die Möglichkeiten für die Steuerung der Beaufschlagung der Federspeicher-Feststellbremse (2) reduziert sind gegenüber den Möglichkeiten für die Steuerung der Beaufschlagung der Federspeicher-Feststellbremse (2) über den ersten Feststellbrems-Steuerkreis (13).

13. Feststellbremsanlage (1) nach einem der vorhergehenden Ansprüche, **dadurch gekennzeichnet, dass** in dem ersten Feststellbrems-Steuerkreis (13) eine Übertragung eines elektrischen Betätigungssignals (12) durch ein Bussystem erfolgt, während in dem zweiten Feststellbrems-Steuerkreis (18) eine Übertragung eines elektrischen Betätigungssignals (17) ohne Nutzung des Bussystems erfolgt.

## Claims

1. Electro-pneumatic parking brake system (1) for a commercial vehicle comprising
a) a first electro-pneumatic parking brake control circuit (13) with
aa) a parking brake actuation unit (9) which can be actuated manually by the driver and which generates a first electric actuation signal (12) which can be influenced by the actuation by the driver,
ab) a solenoid valve (7) by which it is possible to control the pneumatic bias of a parking spring brake (2),
ac) the operational position of the solenoid valve (7) being dependent on the electric actuation signal (12) of the parking brake actuation unit (9) when a first electric power supply is available,
and
b) a second electro-pneumatic parking brake control circuit (18) which comprises a second electric power supply (19),
**characterised in that**
c) in the case of a failure of the first electro-pneumatic parking brake control circuit (13) by the parking brake actuation unit (9) the pneumatic bias of the parking spring brake (2) is controllable via the second electro-pneumatic parking brake control circuit (18)
d) the second electric power supply (19) being arranged in a driver's cabin of the commercial vehicle

2. Parking brake system (1) of claim 1, **characterised in that** the second electric power supply (19) is integrated into the parking brake actuation unit (9).

3. Parking brake system (1) of claim 1, **characterised in that** in the first parking brake control circuit (13) and in the second parking brake control circuit (18) the control of the pneumatic bias of the parking spring brake (2) is provided by one and the same solenoid valve (7).

4. Parking brake system (1) of one of the preceding claims, **characterised in that** the second electric power supply (19) is a battery or accumulator (14).

5. Parking brake system (1) of claim 3, **characterised in that** a monitoring device is provided which monitors the loading state of the battery or of the accumulator (14).

6. Parking brake system (1) of one of the preceding claims, **characterised in that** the second electric power supply (19) is embodied as a generator (20) operated by the driver.

7. Parking brake system (1) of claim 5, **characterised in that** it is possible to automatically activate the generator (20) if there is a failure of the first electric power supply.

8. Parking brake system (1) of one of the preceding claims, **characterised in that**
a) the second parking brake control circuit (18) comprises
aa) a manually actuatable pulse generator (21) and
ab) a propellant (23) which can be activated by a pulse of the pulse generator (21)
and
b) it is possible to induce a deaerating position of a valve deaerating the parking spring brake (2) or of the solenoid valve (7) by an ignition of the propellant (23).

9. Parking brake system (1) of one of the preceding claims, **characterised in that** the parking brake actuation unit (9) communicates with a compressed air processing device (5) into which preferably the valve which in a deaerating position deaerates the parking spring brake (2) and/or the solenoid valve (7) by which it is possible to control the pressurization of the parking spring brake (2) are/is integrated.

10. Parking brake system (1) of one of the preceding claims, **characterised in that** the second electro-pneumatic parking brake control circuit (18) is embodied as a passive control circuit having no electronic control unit.

11. Parking brake system (1) of one of the preceding claims, **characterised in that** it is possible to manually activate the second parking brake control circuit (18) by a switch (15).

12. Parking brake system (1) of one of the preceding claims, **characterised in that** in the second parking brake control circuit (18) the options for controlling the bias of the parking spring brake (2) are reduced when compared to the options for controlling the bias of the parking spring brake (2) via the first parking brake control circuit (13).

13. Parking brake system (1) of one of the preceding claims, **characterised in that** in the first parking brake control circuit (13) an electric actuation signal (12) is transmitted via a bus system whereas in the second parking brake control circuit (18) an electric actuation signal (17) is transmitted without using the bus system.

## Revendications

1. Installation de freinage de stationnement (1) pour un véhicule utilitaire avec
a) un premier circuit de commande du frein de stationnement électropneumatique (13) avec
aa) une unité d'actionnement de frein de stationnement (9) actionnée manuellement par le conducteur, qui génère un premier signal d'actionnement électrique (12) pouvant être contrôlé par l'actionnement par l'intermédiaire du conducteur,
ab) une électrovanne (7) par l'intermédiaire de laquelle l'alimentation pneumatique d'un frein de stationnement à accumulateur à ressort (2) peut être contrôlée,
ac) moyennant quoi, lors d'une première alimentation en puissance électrique du premier circuit de commande du frein de stationnement (13), la position de fonctionnement de l'électrovanne (7) dépend du signal d'actionnement électrique (12) de l'unité d'actionnement du frein de stationnement (9),
et
b) un deuxième circuit de commande de frein de stationnement électropneumatique (18) qui disposé d'une deuxième alimentation de puissance électrique (19),
**caractérisé en ce que**
c) le deuxième circuit de commande du frein de stationnement électropneumatique (18) permet, lors d'une panne du premier circuit de commande du frein de stationnement électropneumatique (13), de contrôler, par l'intermédiaire de l'unité d'actionnement du frein de stationnement (9), l'alimentation pneumatique du frein de stationnement à accumulateur à ressort (2),
d) la deuxième alimentation de puissance électrique (19) étant disposée dans une cabine de conducteur du véhicule utilitaire.

2. Installation de freinage de stationnement (1) selon la revendication 1, **caractérisée en ce que** la deuxième alimentation de puissance électrique (19) est intégrée dans l'unité d'actionnement du frein de stationnement (9).

3. Installation de freinage de stationnement (1) selon la revendication 1, **caractérisée en ce que**, dans le premier circuit de commande du frein de stationnement (13) et dans le deuxième circuit de commande du frein de stationnement (18), le contrôle de l'alimentation pneumatique du frein de stationnement à accumulateur à ressort (2) a lieu par l'intermédiaire de la même électrovanne (7).

4. Installation de freinage de stationnement (1) selon l'une des revendications précédentes, **caractérisée en ce que** la deuxième alimentation de puissance électrique (19) est conçue comme une batterie ou un accumulateur (14).

5. Installation de freinage de stationnement (1) selon la revendication 3, **caractérisée en ce qu'**un dispositif de surveillance est prévu, qui surveille l'état de charge de la batterie ou de l'accumulateur (14).

6. Installation de freinage de stationnement (1) selon l'une des revendications précédentes, **caractérisée en ce que** la deuxième alimentation de puissance électrique (19) est conçue comme un générateur (20) actionné par le conducteur.

7. Installation de freinage de stationnement (1) selon la revendication 5, **caractérisée en ce que** le générateur (20) est activable automatiquement lors de la défaillance de la première alimentation de puissance électrique.

8. Installation de freinage de stationnement (1) selon l'une des revendications précédentes, **caractérisée en ce que**
a) le deuxième circuit de commande du frein de stationnement (18) comprend
aa) un générateur d'impulsions (21) actionnable manuellement et
ab) une charge de propulsion (23) qui peut être activée par l'intermédiaire d'une impulsion du générateur d'impulsions
et
b) une position de ventilation d'une vanne ventilant le frein de stationnement à accumulateur à ressort (2) ou de l'électrovanne (7) peut être provoquée par l'allumage de la charge de propulsion (23).

9. Installation de freinage de stationnement (1) selon l'une des revendications précédentes, **caractérisée en ce que** l'unité d'actionnement du frein de stationnement (9) communique avec un dispositif de préparation d'air comprimé (5) dans lequel est intégrée de préférence la vanne qui ventile, dans une position de ventilation, le frein de stationnement à accumulateur à ressort (2) et/ou l'électrovanne (7), par l'intermédiaire de laquelle l'alimentation en pression du frein de stationnement à accumulateur à ressort (2) peut être contrôlée.

10. Installation de freinage de stationnement (1) selon l'une des revendications précédentes, **caractérisée en ce que** le deuxième circuit de commande de frein de stationnement électropneumatique (18) est conçu comme un circuit de commande passif sans unité de commande électronique.

11. Installation de freinage de stationnement (1) selon l'une des revendications précédentes, **caractérisée en ce que** le deuxième circuit de commande de frein de stationnement (18) peut être activé manuellement par l'intermédiaire d'un commutateur (15).

12. Installation de freinage de stationnement (1) selon l'une des revendications précédentes, **caractérisée en ce que**, dans le deuxième circuit de commande de frein de stationnement (18), les possibilités de commande de l'alimentation du frein de stationnement à accumulateur à ressort (2) sont réduites par rapport aux possibilités de commande de l'alimentation du frein de stationnement à accumulateur à ressort (2) par l'intermédiaire du premier circuit de commande de frein de stationnement (13).

13. Installation de freinage de stationnement (1) selon l'une des revendications précédentes, **caractérisée en ce que**, dans le premier circuit de commande de frein de stationnement (13), a lieu une transmission d'un signal d'actionnement électrique (12) par un système de bus, tandis que, dans le deuxième circuit de commande de frein de stationnement (18), une transmission d'un signal d'actionnement électrique (17) a lieu sans l'aide du système de bus.
